**Europäisches Patentamt**

**European Patent Office**

**Office européen des brevets**

(19)

(11) **EP 1 160 338 A1**

(12) **EUROPEAN PATENT APPLICATION**

(43) Date of publication:
05.12.2001 Bulletin 2001/49

(51) Int Cl.7: **C21B 13/14**, C21B 13/00, C21C 5/52

(21) Application number: 00111037.8

(22) Date of filing: 31.05.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **DANIELI & C. OFFICINE MECCANICHE S.p.A.**
**33042 Buttrio (UD) (IT)**

(72) Inventors:
• **Pavlicevic, Milorad**
**33100 Udine (IT)**
• **Primavera, Alessandra**
**33100 Udine (IT)**
• **Guastini, Fabio**
**Gorizia (IT)**
• **Burba, Gianni**
**Latisana (UD) (IT)**

(74) Representative:
**Reinhard - Skuhra - Weise & Partner**
**Postfach 44 01 51**
**80750 München (DE)**

(54) **Process to preheat and reduce directly reduced iron (DRI) to be fed to an electric arc furnace (EAF)**

(57) The present invention relates to a high energy-saving process for preheating and final reduction of directly reduced iron (DRI) to be conveyed to a melting process, by using melting furnace off-gas, which is characterized by a high temperature and a high CO-content.

FIG. 3

**Description**

The present invention relates to a high energy-saving process for preheating and final reduction of directly reduced iron (DRI) to be conveyed to a melting process, by using melting furnace off-gas, which is characterized by a high temperature and a high CO-content.

Field of the Invention

The future tasks of metallurgical research in the field of steel production can be summarized as, increasing the production capacity and reduction of product price, improving the product quality, development of processes that are not dangerous for the environment and reduction of energy consumption and materials in the production of steel.

According to the state of the art, steel can be produced from iron ores/iron minerals by direct reduction of the solid iron ore to produce sponge iron ("directly reduced iron", DRI). This DRI is then fed to a melting furnace or a smelting furnace, for example an electric arc furnace (EAF), or the like. Due to the need of reducing steel production costs, research directed towards these integrated processes that relate to the production of liquid steel from Fe mineral, has increased.

The only integrated process which has found an industrial application is the one quoted in U.S. patents No. 5,447,550 and No. 5,296,015, which essentially concerns the production of DRI in a shaft through hot discharging, pneumatic transportation and feeding to an EAF. In order to make the continuous DRI production process compatible with the discontinuous EAF process, a part of the DRI product is cooled and stored in a parallel circuit. Obviously, the presence of a reduction shaft in proximity of the melting process zone is required.

Principally, heat can be transferred from a gas to an object through two different ways. First, heat can be transferred via the sensitive power/heat of a gas, which corresponds to its temperature, flow rate and composition. Secondly, the latent heat/power of a gas can be used, for example in an EAF off-gas, which has a high CO-content, the heat generated by the exothermic oxidation reaction of CO: $CO + \frac{1}{2} O_2 => CO_2$.

The processes disclosed in the U.S. patents No. 5,447,550 and No. 5,296,015 enable to recover the sensitive heat of the charged DRI, but present some disadvantages that make it non-competitive from an economical point of view, especially as regards high productivity. In fact, besides the difficulties associated with the utilisation of pneumatic transport, i.e. high percentage of fines in the product, the necessity of a treatment gas circuit to avoid the DRI reoxidation, the main problem is the high power (sensitive power + latent power) dissipated by the EAF off-gases.

Another method that allows some energy saving in the melting process consists in preheating the EAF feeding (i.e. the DRI) by means of the sensitive heat of the gases coming out of the melting process. There are several patents related to this method, for example U.S. Patent No. 4,736,383, WO 98/43032 or U.S. Patent No. 4,002,465, which is mainly used for scrap preheating and which is suitable for different plants. However, all these processes are associated with high emissions of $CO_2$.

A very important parameter for the DRI composition in the production of liquid steel concerns the FeO content, since the energy consumption in the melting furnace increases with the FeO content. Usually, DRI has a FeO content of about 3-9 wt.-%.

Thus, it would be desirable to reduce the FeO content of the DRI before transferring the DRI to a melting furnace.

Therefore, it is an object of the present invention to provide a process for preheating and final reduction of directly reduced iron (DRI) to be conveyed to a melting furnace which does not have the above-mentioned disadvantages and which considerably reduces the energy consumption in steel production.

These problems are solved by a process according to claim 1 for preheating and reduction of directly reduced iron (DRI) to be fed to a melting furnace, preferably an electric arc furnace (EAF). The process according to the present invention has the advantage that both the latent heat and the sensitive heat of the melting furnace off-gas are used to preheat the DRI. Further, due to the high CO-content of the melting furnace off-gas, natural gas, which is often used after partial oxidation to CO and $H_2$ for preventing DRI from being reoxidized, is saved.

In a preferred embodiment of the present invention at least the temperature of the melting furnace off-gas is measured before adjusting the temperature and the composition of the melting furnace off-gas.

In another preferred embodiment at least the composition of the melting furnace off-gas is measured before adjusting the temperature and the composition of the melting furnace off-gas.

According to the present invention it is preferred that the melting furnace is an electric arc furnace (EAF).

The values of temperature, pressure and composition of the off-gases are measured and the temperature and $CO/CO_2$ ratio of said gas are adjusted in order to obtain a composition that may be utilized for preheating and final reduction of DRI.

In the process according to the present invention, it is preferred that the temperature of the melting furnace off-gas is adjusted to at least 630°C, preferably 700 - 1100 °C and for its composition to have a $CO/CO_2$-ratio of at

least 1, preferably 1.5 - 4.

The adjustment of temperature and composition of the melting furnace off-gas is preferably performed by burning a mixture of air and/or $O_2$, recycle gas obtained from gas which has been contacted with the DRI, and optionally $CH_4$, with the melting furnace off-gas.

The recycle gas is preferably obtained after removing fines, cooling the gas, pressurizing and intermediate storage of the gas.

The DRI is preferably preheated to a temperature of 300 - 700 °C, more preferred 500-700°C, using the adjusted melting furnace off-gas. The use of melting furnace off-gas has the advantage that the melting furnace off-gas does not have to be transferred to a fume plant and wasted.

In a preferred embodiment the DRI is contacted with said adjusted gas by a vertically split flow.

According to the present invention the DRI is preferably reduced to a metallization of at least 95 wt.-%. It is further preferred that the DRI is reduced to a final FeO content of 1 - 5 wt.-%. Due to this reduction, the energy consumption in the following melting process can be considerably reduced.

It is further preferred that the adjusted gas contains 0 - 30 % $H_2$ which is produced by the reaction of $CH_4$ with $O_2$. The presence of $H_2$ has the advantage that the reducing capability of the atmosphere used to preheat the DRI is increased, which prevents Fe in the DRI from being reoxidized to FeO and/or helps to reduce FeO in the DRI to Fe.

The present invention also comprises a plant for performing the process according to claim 1.

It is preferred that the plant for performing the process of the present invention comprises a means for measuring at least the temperature of the melting furnace off-gas and/or the composition of the melting furnace off-gas. This means is preferably a combustion chamber.

In said plant, the adjustment of the melting furnace off-gas is preferably performed in a combustion chamber, comprising a controlled burner, controlled inlets for melting furnace off-gas, $CH_4$, air and/or $O_2$ and cooling recycled gas and a controlled outlet for transferring said adjusted gas to the preheater.

In a preferred embodiment, the plant further comprises a device for separating fines from the preheater off-gas, a cooling device for cooling the preheater off-gas, a pressurizing device and an intermediate storage device, from which the recycled preheater off-gas is transferable to the combustion chamber and/or a fume plant. Thus, the preheater off-gas can be advantageously recycled and used to cool the melting furnace off-gas.

The preheater comprises preferably at least one discharging device at the bottom and at least one gas inlet for the gas to be contacted with the DRI.

It is further preferred that the preheater has essentially a cylindrical form.

In a preferred embodiment, the preheater comprises at least two conical discharging devices located at the bottom of said cylindrical container and three gas inlets for the gas to be contacted with the DRI, wherein one gas inlet is located centrally at the bottom of the preheater and two gas inlets are located at the side of said conical discharging devices. This construction has the advantage that the DRI can be efficiently contacted with the adjusted melting furnace off-gas.

<u>Figures</u>

Fig. 1    shows the dependence of energy consumption in a melting furnace as a function of the FeO-content in the DRI.

Fig. 2A    shows the thermodynamic conditions to obtain preheat reduction in a Fe-C-O thermodynamic diagram.

Fig. 2B    shows the thermodynamic conditions to obtain preheat reduction in the presence of 20% (CO + $CO_2$) in the gas phase.

Fig. 3    shows a plant for preheating and final reduction of DRI to be fed to an EAF.

Fig.4    is an enlarged view of the preheater of Fig. 3.

Fig.5    shows a side view of the preheater and sectional views indicating the positions of gas inlets.

<u>Detailed Description</u>

The present invention describes a procedure which permits DRI to be fed to a melting furnace, preferably an EAF, by using the latent heat and the sensitive heat of the furnace off-gas, while at the same time reducing the residual FeO % in the DRI. Thus, the furnace production capacity is improved. As a further positive effect, a deposition of C according to the Boudouard reaction ($2CO \Leftrightarrow C + CO_2$), mainly in the shaft top zone where the gas temperature and that of solid matters are lower, can be obtained.

It is possible to use different types of melting furnaces, for example smelting furnaces. However, the use of an EAF is preferred according to the present invention.

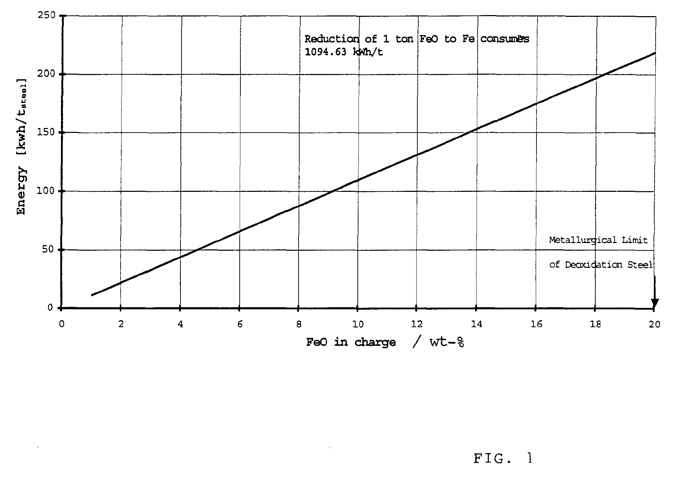

Figure 1 shows the dependence of the furnace energy requirements as a function of the FeO content in the DRI. For the reduction of 1 ton FeO to Fe in the EAF, about 1094.63kWh are required. Thus, by reducing the FeO content in the DRI to be charged in the EAF, the energy consumption will be considerably reduced. Since the DRI usually contains 3-9 wt.-% FeO, it is clear that a reduction of the FeO content or a high metallization of DRI will reduce the energy consumption in the EAF melting process. A combined preheating and reduction can be carried out according to the present invention during the preheating process by suitably adjusting the gas temperature and/or composition of the melting furnace off-gas to be contacted with the DRI. The energy saved in the melting process through this method amounts to 25-100 $kWh/t_{liquid\ steel}$.

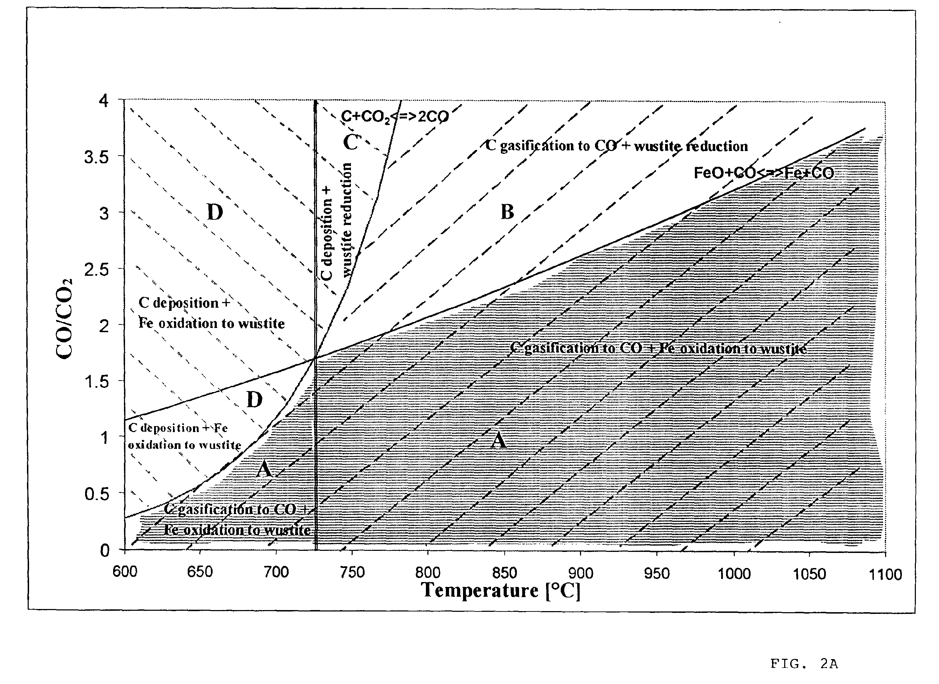

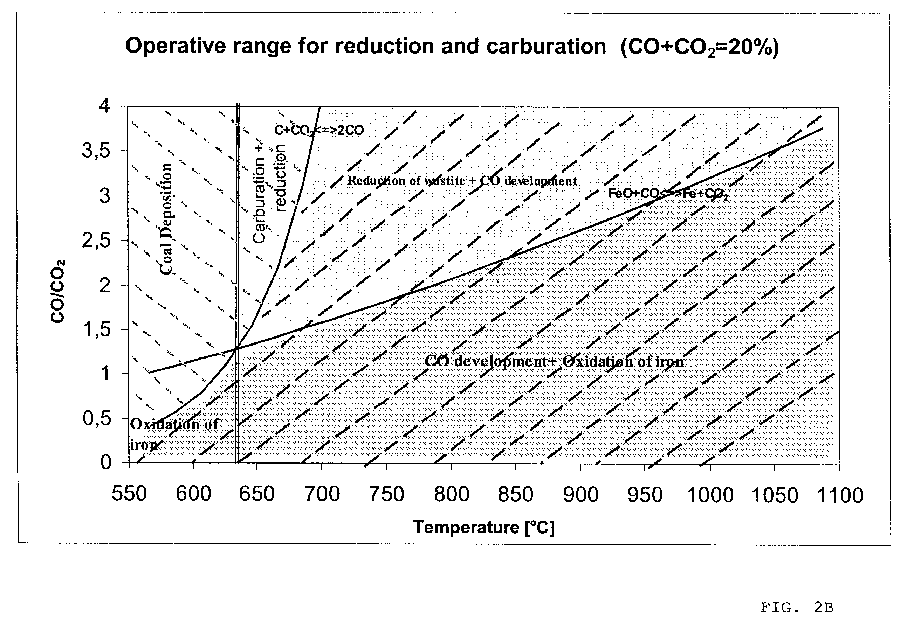

The composition of the gas fed to the preheating reactor and its temperature should be defined in order to avoid the Fe reoxidation reaction and to favour the reduction of remaining FeO present in the DRI. In Fig. 2A, a thermodynamic diagram is shown, which gives the min. value of the $CO/CO_2$-ratio to be present in the gas to heat the DRI without incurring in its reoxidation. The limit conditions are also summarized in Table 1. The components of the off-gases are in this case only CO and $CO_2$. In the real case, off-gases are composed of CO, $CO_2$ and other components, i.e. $N_2$, $H_2$, $H_2O$. In this case, the $C + CO_2 \leftrightarrow 2\ CO$ equilibrium curve moves towards the left (see Fig. 2B for a (CO + $CO_2$)-content in the gas phase of 20%), fixing new limit conditions.

Table 1:

| Limit conditions for obtaining preheat-oxidation and/or preheat carburation | | |
|---|---|---|
| | **$CO/CO_2$-ratio** | **T / °C** |
| Wustite reduction / C gasification (zone B) Lower limit | 1.6 | 730 |
| Wustite reduction / Carburation (zone C) Lower limit | 1.6 | 730 |
| Fe oxidation / Carburation (zone D) Higher limit | 1.6 | 730 |
| Fe oxidation / C gasification (zone A) | | |

Although the melting furnace off-gas composition will usually be adjusted using recycle-gas, $CH_4$ and $O_2$ and/or air, it is also possible according to the present invention to use the melting furnace off-gas without a subsequent adjustment of its composition.

The off-gas of the melting process is preferably conveyed into a combustion chamber where, after mixing with recycle gas and, if necessary, with $CH_4$ and $O_2$ and/or air (in order to increase the $CO/CO_2$ ratio), a reducing gas with desired temperature and composition is generated. The added $CH_4$ and $O_2$ have the purpose of increasing the $CO/CO_2$-ratio though a partial oxidation reaction ($CH4 + ½\ O_2 \rightarrow CO + 2H_2$), generating the $H_2$ for the final reduction of FeO. Cold fed DRI can be preheated, depending on the gas used, up to a temperature of 300-700 °C.

The upper limit of the DRI preheating temperature depends on the characteristics of the processed material, but may be limited by the following considerations:

- a too high temperature could lead to DRI pellet sticking;
- a faster Fe re-oxidation kinetic occurs at high temperatures, even at high values of the $CO/CO_2$-ratio;
- C, initially deposited on the DRI according to the Boudouard reaction: $2CO \Leftrightarrow C+CO_2$ may be (re)gasified.

Generally, the following conditions are applicable to achieve a combined preheating and reduction:

$$T_{inlet\ gas} \geq 630°C \qquad CO/CO_2 \geq 1\ (\text{compare also Fig. 2B})$$

Preferred operative ranges to obtain preheating and reduction are:

$$T_{inlet\ gas} = 700°C - 1100°C \text{ with } CO/CO_2 = 1.5 - 4.$$

The DRI is preheated to a temperature of 300 to 700°C, preferably 500-700°C.

It is possible in the process according to the present invention to obtain a FeO-content in the DRI of 1-5 wt.-% or a metallization of at least 95 wt.-%.

Short Description of the Plant

The purpose of this description is to focus on the possibility of metallization and preheating the DRI using the melting furnace off-gases, which otherwise would directly flow to the fume plant.

A suitable plant according to the present invention should focus on the possibility of metallization (reduction of FeO to Fe) and preheating DRI using melting furnace off-gases, preferably EAF off-gases, which otherwise would directly flow to the fume plant.

In such a plant, the sensitive heat of fumes with a rich carbon monoxide content is used, in addition with the heat produced by their combustion with air or an air/$O_2$-mixture in a chamber capable of burning such fumes in a controlled manner. If necessary, $CH_4$ and $O_2$ can be injected in the combustion chamber in order to increase the $CO/CO_2$-ratio and to obtain a reducing atmosphere through the reaction of partial $CH_4$ oxidation to yield CO and $H_2$.

The combustion products exchange their sensitive and latent heat with the DRI in a preheater which is charged and operated separately from the EAF. Dust is removed from fumes leaving the preheater, which are then cooled, passed through a booster and afterwards conveyed to the above-mentioned combustion chamber.

The proportion of cold fumes, which has not been used in the closed process cycle, is conveyed to an exhaust gas treatment plant.

In a variant of the plant the gases coming from the preheater are directly conveyed to the fume plant. In this case the temperature of the off-gases flowing to the preheater may be controlled, for instance, using a heat exchanger. In any case the plant is equipped with instruments to measure the temperature and the composition of the melting furnace off-gas.

The range of flow rates of the adjusted off-gas to be fed to the preheater is very wide. The lower value is the theoretic value required for the carburation and preheating of the DRI. The maximum value depends on the pressure drop in the preheater and on the stability of the material inside the preheater. Flow rates range from about 300 to about 2,500 $Nm^3/t$.

In the following example a plant and a process according to the present invention are described. However, the example is not intended to limit the scope of the present invention.

Example

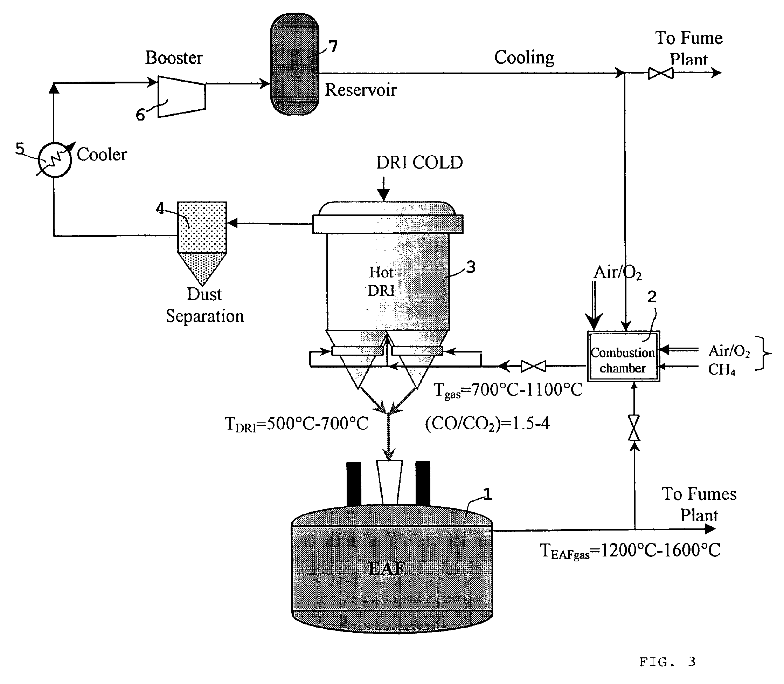

A plant in accordance with the present invention is shown schematically in Fig. 3.

The plant includes an EAF (1), capable of melting DRI for the production of liquid steel. The secondary product of the melting operation (EAF off-gas) is the off-gas of the decarburation phase. Since it is mainly made of CO, it can burn and produce the heat necessary to preheat the DRI.

This off-gas leaving the EAF with a temperature of about 1200°C to about 1600°C enters the combustion chamber (2), where it is oxidised with air (air/$O_2$) in an atmosphere thermally controlled by the recycle gas according to a ratio, which permits to obtain fumes at a temperature of 700 - 1100°C and a $CO/CO_2$-ratio of 1.5 - 4. If necessary, $CH_4$ and $O_2$ can be injected in the combustion chamber in order to increase the $CO/CO_2$-ratio and to obtain a reducing atmosphere through the reaction of partial $CH_4$ oxidation to yield CO and $H_2$. The $H_2$-content can vary between 0 to about 30%.

Since the combustion products in the following heating phase enter in straight contact with the DRI, gases must be devoid of oxidant characteristics, and in order to achieve this, the $CO/CO_2$-ratio has to be regulated by acting on the combustion air flow.

The fumes that leave the combustion chamber enter the preheater (3) through some distributors at the bottom of the cylindrical area.

The preheater (3) can be seen as a shaft for inside refractory preheating and is equipped with a tapered discharging device at the bottom for the descent of the solid material once the heating has concluded. While ascending, the adjusted melting furnace off-gas transfers its heat to the DRI which is loaded in solid form at ambient temperature prior to the preheating by means of a charging system, and leaves the preheater through a collector located at the upper side of the preheater (3). Afterwards, the gases pass to the operations of removal of the fines and a dust separator (4) (cyclone and scrubber) and are subsequently cooled by means of a heat exchanger (5). The gas temperature reached at the end of these treatments allows using a fan (6) capable of adjusting the pressure back to the values approximating the ones present in the combustion chamber. The fan performance does not exceed 600-800 mm $H_2O$.

The gases thus compressed are pushed into a storage unit (7) with the aim of filling the flow gas power, if any, during start-ups and preheating stoppages.

The off-gas of the storage unit (7) is split by a three-line valve, regulated by controlling the temperature of the products of the fume partial combustion of chamber (2), which divides the off-gas into two independent flows: the first one is directed to the combustion chamber, the second one is destined to the exhaust gas treatment plant.

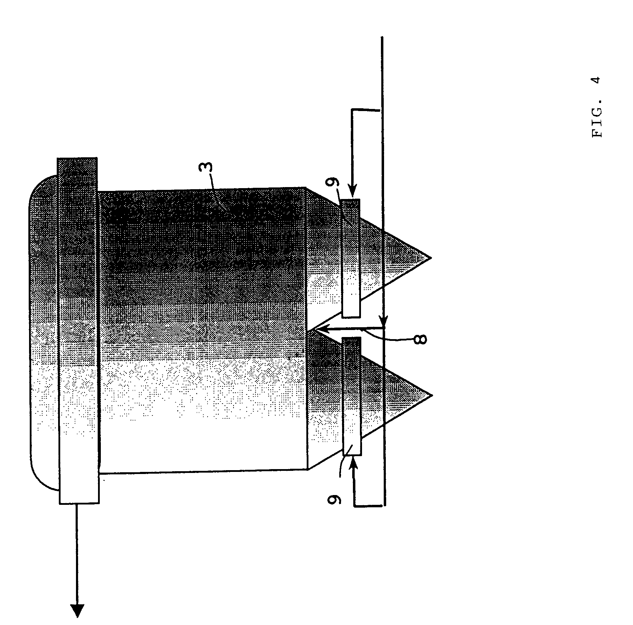

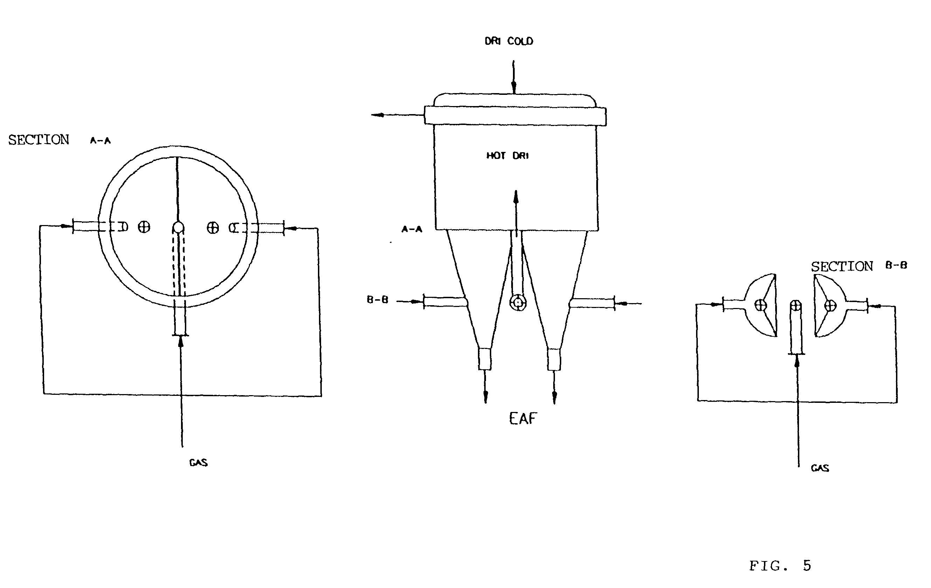

The preheater, which is shown in Fig. 4, is not very high and has a considerable horizontal extension. Thus, a specific gas distribution is required to homogeneously contact all the charged material mass. The heating gas is injected through two distinct ways: the first one consisting in an injection between the two discharge cones at the bottom of the cylindrical area (8), the second one through two distribution rings placed at the top of the two discharge cones (9). In Fig. 5, sectional views of the preheater are shown, indicating the positions of the gas inlets.

## Claims

1.  A process for preheating and reduction of directly reduced iron (DRI) to be fed to a melting furnace, including the steps of:

    -   adjusting the temperature and the composition of melting furnace off-gas outside the melting furnace to a value, suitable to preheat and reduce the DRI,
    -   contacting the DRI with said adjusted gas to preheat and reduce the DRI.

2.  A process according to claim 1,
    **characterized in that**
    at least the temperature of the melting furnace off-gas is measured before adjusting the temperature and the composition of the melting furnace off-gas.

3.  A process according to claim 1,
    **characterized in that**
    at least the composition of the melting furnace off-gas is measured before adjusting the temperature and the composition of the melting furnace off-gas.

4.  A process according to one or more of the preceding claims,
    **characterized in that**
    said melting furnace is an electric arc furnace (EAF).

5.  A process according to one or more of the preceding claims,
    **characterized in that**
    said melting furnace off-gas is adjusted to a temperature of at least 630°C and a $CO/CO_2$-ratio of at least 1.

6.  A process according to one or more of the preceding claims,
    **characterized in that**
    said melting furnace off-gas is adjusted to a temperature of 700-1100°C.

7.  A process according to one or more of the preceding claims,
    **characterized in that**
    the composition of said melting furnace off-gas is adjusted to have a $CO/CO_2$-ratio of 1.5 - 4.

8.  A process according to one or more of the preceding claims,
    **characterized in that**
    the temperature of said melting furnace off-gas is adjusted to 700 - 1100 °C and its composition to have a $CO/CO_2$-ratio of 1.5 - 4.

9.  A process according to one or more of the preceding claims,
    **characterized in that**
    the adjustment of temperature and composition of said melting furnace off-gas is performed by burning a mixture of air and/or $O_2$, recycle gas and optionally $CH_4$, with the melting furnace off-gas.

10. A process according to claim 9,
    **characterized in that**
    said recycle gas is obtained from gas, which has been contacted with the DRI in the preheating and reduction step (preheating off-gas).

11. A process according to claim 9 or 10,

**characterized in that**
said recycle gas is obtained after removing fines, cooling the gas, pressurizing and intermediate storage of the gas.

12. A process according to one or more of the preceding claims,
 **characterized in that**
 said DRI is contacted with said adjusted gas by a vertically split flow.

13. A process according to one or more of the preceding claims,
 **characterized in that**
 said DRI is preheated to a temperature of 300 - 700 °C, preferably 500 -700°C.

14. A process according to one or more of the preceding claims,
 **characterized in that**
 said DRI is reduced to a metallization of at least 95 wt.-%.

15. A process according to one or more of the preceding claims,
 **characterized in that**
 said DRI is reduced to a FeO-content of 1-5% wt.-%.

16. A process according to one or more of the preceding claims,
 **characterized in that**
 said adjusted gas contains 0-30% $H_2$, which is produced by the reaction of $CH_4$ with $O_2$.

17. A process according to one or more of the preceding claims,
 **characterized in that**
 the temperature of said melting furnace off-gas is about 1200 °C - 1600 °C before adjustment thereof.

18. A plant for performing the process according to claim 1, comprising:

 - a melting furnace,
 - a means for the adjustment of the melting furnace off-gas, and
 - a preheater for contacting the DRI with said adjusted melting furnace off-gas.

19. A plant according to claim 18,
 **characterized in that**
 said means for the adjustment of the melting furnace off-gas is a combustion chamber.

20. A plant according to claim 18 or 19, further comprising means for measuring at least the temperature of the off-gas.

21. A plant according to claim 18, 19 or 20, further comprising means for measuring at least the composition of the off-gas.

22. A plant according to one or more of the claims 18 to 21,
 **characterized in that**
 said melting furnace is an electric arc furnace.

23. A combustion chamber, comprising a controlled burner, controlled inlets for EAF off-gas, $CH_4$, air and/or $O_2$ and cooling recycled gas and a controlled outlet for transferring said adjusted gas to the preheater.

24. A plant according to one or more of the claims 18 to 22,
 **characterized in that**
 said plant further comprises a device for separating fines from the preheater off-gas, a cooling device for cooling the preheater off-gas, a pressurizing device and an intermediate storage device, from which the recycled preheater off-gas is transferable to the combustion chamber and/or a fume plant.

25. A plant according to one or more of the claims 18 to 22 or 24,
 **characterized in that**
 said preheater comprises at least one discharging device at the bottom and at least one gas inlet for the gas to be contacted with the DRI.

26. A plant according to one or more of the claims 18 to 22, 24 or 25,
    **characterized in that**
    said preheater has essentially a cylindrical form.

27. A plant according to one or more of the claims 18 to 22 or 24 to 26,
    **characterized in that**
    said preheater comprises at least two conical discharging devices located at the bottom of said cylindrical container and three gas inlets for the gas to be contacted with the DRI, wherein one gas inlet is located centrally at the bottom of the preheater and two gas inlets are located at the side of said conical discharging devices.

28. Use of a process according to claim 1 in the production of steel.

FIG. 1

FIG. 2A

FIG. 2B

FIG. 3

FIG. 4

SECTION A-A

DRI COLD

HOT DRI

A-A

B-B

EAF

GAS

SECTION B-B

GAS

FIG. 5

EP 1 160 338 A1

**European Patent Office**

## EUROPEAN SEARCH REPORT

Application Number

EP 00 11 1037

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 209 861 A (KOBE STEEL LTD) 28 January 1987 (1987-01-28) | 1-3,5,6, 12, 16-18, 20,21, 25,26,28 | C21B13/14 C21B13/00 C21C5/52 |
| A | * abstract *<br><br>* column 1, line 1 - line 12 *<br>* column 3, line 8 - line 36 *<br>* column 4, line 42 - column 5, line 32 *<br>* claims 1-4,6-8; figures 1-3; examples; tables *<br>--- | 4,7-11, 22,24,27 | |
| X | US 4 416 689 A (COLLIN PER H) 22 November 1983 (1983-11-22) | 1-4,6, 17,18, 20-22, 25,28 | |
| A | * abstract *<br>* column 1, line 5 - line 14 *<br>* column 1, line 48 - line 56 *<br>* column 2, line 26 - line 32 *<br>* column 3, line 21 - line 43 *<br>* claims 1-3; figure *<br>---<br><br>-/-- | 5,7-9,14 | |

TECHNICAL FIELDS SEARCHED (Int.Cl.7)

C21B
C21C

The present search report has been drawn up for all claims

| Place of search | Date of completion of the search | Examiner |
|---|---|---|
| THE HAGUE | 25 October 2000 | Ceulemans, J |

EPO FORM 1503 03.82 (P04C01)

## EUROPEAN SEARCH REPORT

**European Patent Office**

**Application Number**

EP 00 11 1037

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 1 208 270 A (INLAND STEEL CO.) 23 February 1960 (1960-02-23) | 1-3,6, 13, 16-21, 25,26,28 | |
| A | * page 1, left-hand column, paragraph 1 * | 4,5,7-9, 14,15, 22-24 | |
| | * page 2, left-hand column, paragraph 2 - right-hand column, paragraph 1 * * page 4, left-hand column, paragraph 3 - right-hand column, paragraph 2 * * page 5, left-hand column, paragraph 2 - right-hand column, paragraph 1 * * page 5, right-hand column, paragraph 4 - page 6, left-hand column, paragraph 1 * * page 6, right-hand column, paragraph 3 - page 7, right-hand column, paragraph 2 * * page 8, left-hand column, paragraph 4 - right-hand column, paragraph 3 * * claims; figure * | | |
| A | US 6 036 744 A (MATSUMURA TOSHIHIDE ET AL) 14 March 2000 (2000-03-14) * claims 1,2,7-10,17-21,23-26,28 * | 1,6,14, 15 | **TECHNICAL FIELDS SEARCHED (Int.Cl.7)** |

The present search report has been drawn up for all claims

| Place of search | Date of completion of the search | Examiner |
|---|---|---|
| THE HAGUE | 25 October 2000 | Ceulemans, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                          EP 00 11 1037

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2000

| Patent document cited in search report | | Publication date | Patent family member(s) | | Publication date |
|---|---|---|---|---|---|
| EP 0209861 | A | 28-01-1987 | JP | 1957767 C | 10-08-1995 |
| | | | JP | 6089384 B | 09-11-1994 |
| | | | JP | 62020806 A | 29-01-1987 |
| | | | JP | 1874279 C | 26-09-1994 |
| | | | JP | 5081641 B | 15-11-1993 |
| | | | JP | 62020807 A | 29-01-1987 |
| | | | JP | 1957768 C | 10-08-1995 |
| | | | JP | 6089385 B | 09-11-1994 |
| | | | JP | 62020808 A | 29-01-1987 |
| | | | AU | 582453 B | 23-03-1989 |
| | | | AU | 6025686 A | 22-01-1987 |
| | | | CA | 1284274 A | 21-05-1991 |
| | | | DE | 3679006 D | 06-06-1991 |
| | | | SU | 1609456 A | 23-11-1990 |
| | | | IN | 167817 A | 22-12-1990 |
| US 4416689 | A | 22-11-1983 | SE | 424198 B | 05-07-1982 |
| | | | DE | 3137755 A | 15-07-1982 |
| | | | GB | 2085480 A,B | 28-04-1982 |
| | | | JP | 57092112 A | 08-06-1982 |
| | | | JP | 62047921 B | 12-10-1987 |
| | | | SE | 8007225 A | 16-04-1982 |
| FR 1208270 | A | 23-02-1960 | NONE | | |
| US 6036744 | A | 14-03-2000 | JP | 9256017 A | 30-09-1997 |
| | | | JP | 10102114 A | 21-04-1998 |
| | | | JP | 10102115 A | 21-04-1998 |
| | | | JP | 10102116 A | 21-04-1998 |
| | | | JP | 10102117 A | 21-04-1998 |
| | | | JP | 10102118 A | 21-04-1998 |
| | | | AU | 715276 B | 20-01-2000 |
| | | | AU | 1940497 A | 01-10-1997 |
| | | | BG | 102721 A | 31-03-1999 |
| | | | BR | 9707996 A | 04-01-2000 |
| | | | CA | 2248273 A | 18-09-1997 |
| | | | CN | 1218516 A | 02-06-1999 |
| | | | CZ | 9802794 A | 14-07-1999 |
| | | | EP | 0888462 A | 07-01-1999 |
| | | | HU | 9902339 A | 29-11-1999 |
| | | | WO | 9734018 A | 18-09-1997 |
| | | | NO | 984161 A | 10-09-1998 |
| | | | PL | 328812 A | 15-02-1999 |
| | | | SK | 125398 A | 07-05-1999 |

EPO FORM P0459

For more details about this annex : see Official Journal of the European Patent Office, No. 12/82